# EUROPEAN PATENT SPECIFICATION

(11) **EP 3 257 050 B1**
(45) Date of publication and mention of the grant of the patent: **26.05.2021**
(21) Application number: 16748780.0
(22) Date of filing: 11.02.2016
(51) Int. Cl.: G21C 7/04, G21C 3/328, G21C 1/20, G21C 3/326, G21C 3/42, G21C 3/58, G21C 3/62

(54) **NUCLEAR FUEL CONTAINING A NEUTRON ABSORBER MIXTURE**
KERNBRENNSTOFF MIT EINEM NEUTRONENABSORBERGEMISCH
COMBUSTIBLE NUCLÉAIRE CONTENANT UN MÉLANGE ABSORBEUR DE NEUTRONS

(30) Priority: 11.02.2015 US 201562115002 P
(43) Date of publication of application: 20.12.2017
(73) Proprietor: Candu Energy Inc., Mississauga, Ontario L5K 1B1 (CA)
(72) Inventor: HONG, In Seob, Oakville, Ontario L6M 5A3 (CA); DAHMANI, Mohamed, Oakville, Ontario L6M 3T9 (CA)
(74) Representative: Pinnington, Giles Oliver
(86) International application number: PCT/IB2016/000114
(87) International publication number: WO 2016/128821

(56) References cited:
- EP-A1- 0 439 002
- EP-A1- 0 532 858
- CA-C- 2 197 412
- US-A- 4 668 468
- US-A1- 2013 301 780
- US-A1- 2013 301 780

## Description

### BACKGROUND

Nuclear reactors generate energy from a nuclear chain reaction (i.e., nuclear fission) in which a free neutron is absorbed by the nucleus of a fissile atom in a nuclear fuel, such as Uranium-235 (²³⁵U). When the free neutron is absorbed, the fissile atom splits into lighter atoms, and releases more free neutrons to be absorbed by other fissile atoms, resulting in a nuclear chain reaction. Thermal energy released from the nuclear chain reaction is converted into electrical energy through a number of other processes well known to those skilled in the art.

The advent of nuclear power reactors adapted to burn nuclear fuel having low fissile content levels (e.g., as low as that of natural uranium) has generated many new sources of burnable nuclear fuel. These sources include waste or recycled uranium from other reactors. This is not only attractive from a cost savings standpoint, but also based upon the ability to essentially recycle spent uranium back into the fuel cycle. US2013301780 describes a nuclear fuel containing a neutron absorber. EP0439002 describes a nuclear reactor core having nuclear fuel and composite burnable absorber.

### SUMMARY

Such nuclear fuel is often packaged in fuel bundles that can be added and removed from a reactor core. To maintain power generation, fresh fuel bundles are inserted to replace spent fuel bundles that have burned up beyond their useful life. Localized spikes in power may occur when fresh reactor fuel bundles are inserted. It is desirable to lower these power spikes to maintain closer to even power generation throughout a power generation cycle. A neutron absorber (which may also be referred to herein as "poison", "burnable poison", "absorber", "burnable absorber", etc.) may be included along with fissile content in a fuel bundle to reduce the nuclear chain reaction by absorbing some of the free neutrons, thereby lowering these power spikes. However, it can be undesirable to lower reactivity in general as the goal of the nuclear reactor is to generate power. Thus, achieving relatively even power generation throughout a power generation cycle, even as fuel bundles become spent and fresh fuel bundles are added, is a constant balancing act.

It is therefore an object of the present disclosure to provide a nuclear fuel bundle having an arrangement and composition that achieves a low reactivity impact and extends fuel discharge burnup while maintaining a low power impact (and related parameters) during normal operation of a reactor core.

A fuel element according to the present invention is defined in claim 1 and a method of controlling burnup according to the invention is defined in claim 11. Preferred embodiments are defined in the dependent claims.

Other aspects of the present disclosure will become apparent by consideration of the detailed description and accompanying drawings.

### BRIEF DESCRIPTION OF THE DRAWINGS

FIG. 1 is a schematic diagram of a nuclear reactor employing any of the fuel bundles of FIGS. 2-6.
FIG. 2 is a cross-sectional view of a first construction of a nuclear fuel bundle in accordance with the disclosure, showing a number of possible fuel and absorber arrangements in the fuel bundle.
FIG. 3 is a cross-sectional view of a second construction of a nuclear fuel bundle in accordance with the disclosure, also showing a number of possible fuel and absorber arrangements in the fuel bundle.
FIG. 4 is a cross-sectional view of a third construction of a nuclear fuel bundle in accordance with the disclosure, also showing a number of possible fuel and absorber arrangements in the fuel bundle.
FIG. 5 is a cross-sectional view of a fourth construction of a nuclear fuel bundle in accordance with the disclosure, also showing a number of possible fuel and absorber arrangements in the fuel bundle.
FIG. 6 is graph illustrating reactivity decay characteristics of different absorbers.
FIG. 7 is a graph illustrating gains in refueling impact and discharge burnup of various absorber mixtures.

### DETAILED DESCRIPTION

Before any constructions of the disclosure are explained in detail, it is to be understood that the disclosure is not limited in its application to the details of construction and the arrangement of components set forth in the following description or illustrated in the accompanying drawings. The disclosure is capable of other constructions and of being practiced or of being carried out in various ways. The scope of protection is defined in the appended claims.

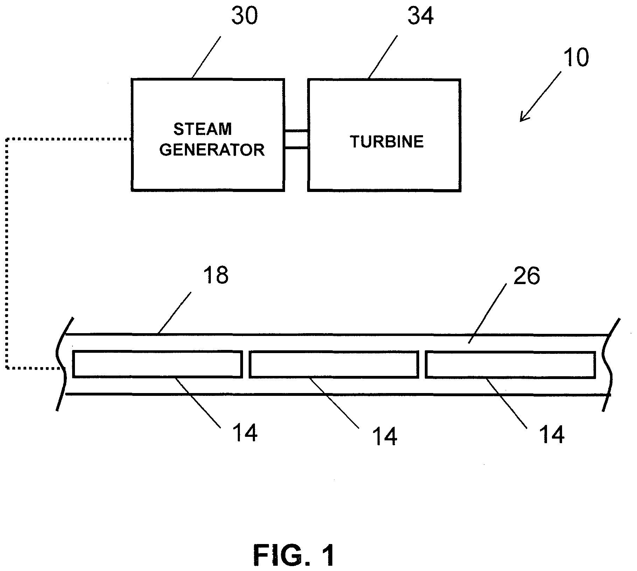

A number of nuclear fuel designs according to various constructions of the present disclosure are described and illustrated herein. These fuels can be used in a variety of nuclear reactors, and are described herein primarily with reference to pressurized heavy water reactors. Heavy water reactors can have, for example, pressurized horizontal or vertical tubes within which fuel is positioned. An example of such a reactor is a Canadian Deuterium Uranium (CANDU) nuclear reactor, a portion of which is shown schematically in FIG. 1. Other types of reactors can have un-pressurized horizontal or vertical tubes, such as apertured horizontal or vertical tubes. Fuel elements for heavy water reactors and respective methods of burnup in heavy water reactors, however, are not part of the present invention.

Pressurized heavy water nuclear reactors are only one type of nuclear reactor in which various nuclear fuels of the present disclosure can be burned. Accordingly, such reactors are described herein by way of example only, it being understood that the various fuels of the present disclosure can be burned in other types of nuclear reactors. For example, the nuclear fuel designs may also be employed with light water reactors (LWR) such as supercritical water reactors (SCWR), pressurized water reactors (PWR), and boiling water reactor (BWR), as will be described toward the end of this disclosure.

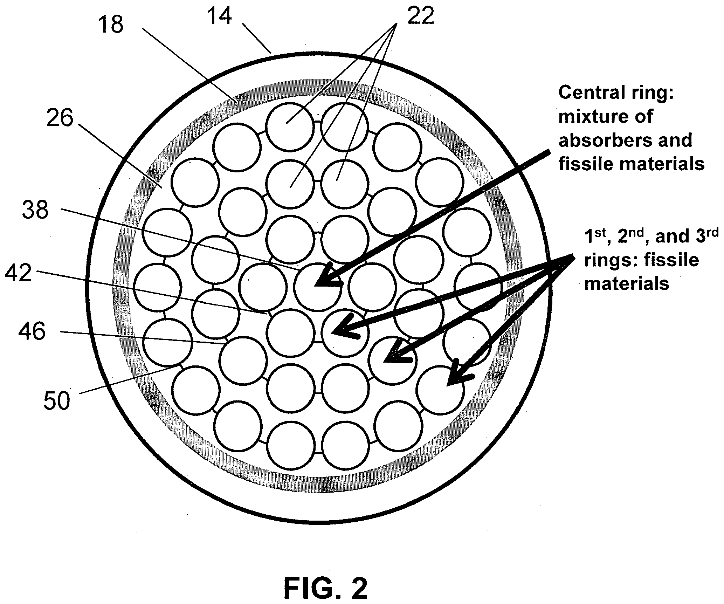

Similarly, the various fuels of the present disclosure described herein can be positioned in any form within a nuclear reactor for being burned. By way of example only, the fuel can be loaded into tubes or can be contained in other forms (each of which are commonly called "pins" or "elements", referred to herein only as "elements" for sake of simplicity). Examples of elements used in some constructions of the present disclosure are indicated at 22 in FIGS. 2-5 as having a round cross section, and are described in greater detail below. However, the elements 22 may have other cross sectional shapes, such as a rectangular or square cross-sectional shapes. In the case of fuel contained within tubes, the tubes can be made of or include zirconium, a zirconium alloy, or another suitable material or combination of materials that in some cases is characterized by low neutron absorption.

Together, a plurality of elements can define a fuel bundle within the nuclear reactor. Such fuel bundles are indicated schematically at 14 in FIG. 1. The fuel bundle(s) may have a cylindrically shaped bundle geometry (i.e., in cross-section), such as those shown in FIGS. 2-5, or can instead have a square or rectangular geometry, such as those that would be used with a non-CANDU reactor such as a light water reactor having n x n fuel elements. The elements of each bundle 14 can extend parallel to one another in the bundle. If the reactor includes a plurality of fuel bundles 14, the bundles 14 can be placed end-to-end inside a pressure tube 18. In other types of reactors, the fuel bundles 14 can be arranged in other manners as desired. The pressure tube 18, the fuel bundle 14, and/or the fuel elements 22 can be configured in various shapes and sizes. For example, the pressure tubes 18, fuel bundles 14, and fuel elements 22 can have any cross-sectional shapes (i.e., other than the round shapes shown in FIGS. 2-5) and sizes desired. As another example, the fuel elements 22 within each fuel bundle 14 can have any relative sizes (i.e., other than the uniform size or two-size versions of the fuel elements 22 shown in FIGS. 2-5).

With continued reference to FIG. 1, when the reactor 10 is in operation, a heavy water coolant 26 flows over the fuel bundles 14 to cool the fuel elements and remove heat from the fission process. As shown in FIGS. 2-5, the heavy water coolant 26 is contained within the pressure tube 18, and occupies subchannels between the fuel elements 22 of the fuel bundle 14. Even though not part of the present invention, nuclear fuels of the present disclosure are also applicable to pressure tube reactors with different combinations of liquids/gasses in their heat transport and moderator systems. In any case, coolant 26 absorbing heat from the nuclear fuel can transfer the heat to downstream equipment (e.g., a steam generator 30), to drive a prime mover (e.g., turbine 34) to produce electrical energy.

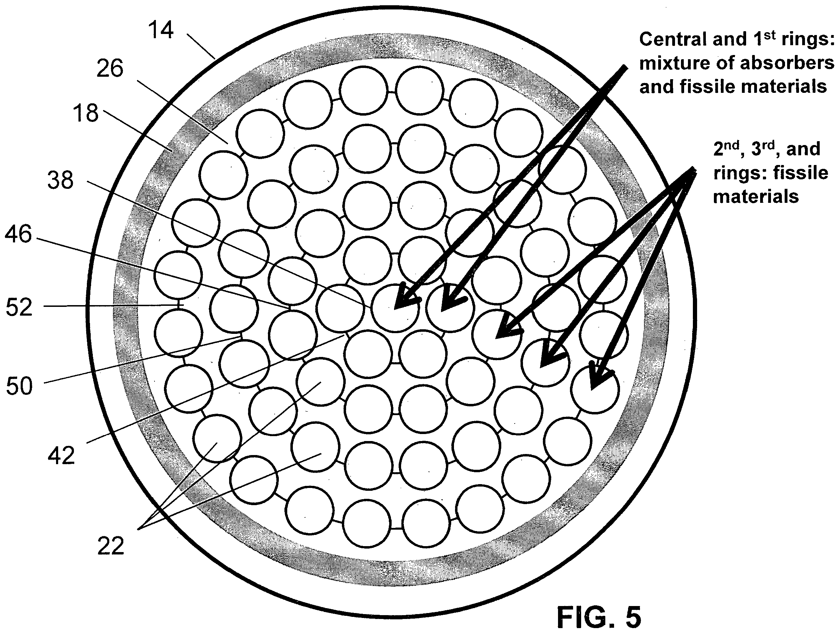

With reference to FIGS. 1-4 by way of example, the fuel elements 22 can include a central element(s) 38 (which could also include one or more central rings of elements or other grouping of central elements), a first plurality of elements 42 positioned radially outward from the central element 38, a second ring or plurality of elements 46 positioned radially outward from the first plurality of elements 42, and a third ring or plurality of elements 50 positioned radially outward from the second plurality of elements 46. In the construction of FIG. 5, the fuel elements 22 also include a fourth ring or plurality of elements 52 positioned radially outward from the third plurality of elements 50. The central element(s) 38 may be generally referred to herein as an inner element or elements, and the first, second, third, and/or fourth (or more) plurality of elements 42, 46, 50, 54 may be generally referred to herein as outer elements. For example, FIGS. 2-5 illustrate a 37-element fuel bundle for CANDU designs, a 43-element fuel bundle for CANFLEX designs, a 43-element CANFLEX variant, and a 61-element CANFLEX variant, respectively. It should be understood that in other constructions, the fuel bundle 14 can include fewer or more elements 22, and can include elements 22 in configurations other than those illustrated in FIGS. 2-5, such as a square lattice assembly for non-CANDU applications. The fuel elements 22 can be also positioned parallel to one another in one or more planes, elements arranged in a matrix or array having a block shape or any other cross-sectional shape, and elements in any other patterned or patternless configuration.

The various nuclear fuels of the present disclosure can include fissile materials that are used (e.g., blended) in conjunction with one or more other materials, as well as neutron absorbers as will be described in greater detail below. The nuclear fuel can be in pellet form, powder form, or in another suitable form or combination of forms. In some constructions, fuels of the present disclosure take the form of a rod, such as a rod of the fuel pressed into a desired form, a rod of the fuel contained within a matrix of other material, and the like. Also, fuel elements made of the materials according to the present disclosure can include a combination of tubes and rods and/or other types of elements.

The fuel elements 22 include a combination of fissile material(s) and neutron absorbers, some of which elements 22 may have different compositions from other elements 22, as will be described in the various constructions below. Canadian Patent Application No. 2,174,983, filed on April 25, 1996, describes examples of fuel bundles for a nuclear reactor. The fissile materials described herein can comprise any of the nuclear fuels in Canadian Patent Application No. 2,174,983. The nuclear fuel includes any one or more of U-233, U-235, PU-239, and/or PU-241, and can include Thorium. In some constructions, the one or more of U-233, U-235, PU-239 and/or PU-241 have more than 0.9 wt% enrichment. More specifically, in some constructions the one or more of U-233, U-235, PU-239 and/or PU-241 have enrichment between about 0.9 wt% and about 20 wt%. In other constructions, the one or more of U-233, U-235, PU-239 and/or PU-241 have enrichment between about 0.9 wt% and about 5.0 wt%. For light water reactor applications by way of example only, the one or more of U-233, U-235, PU-239 and/or PU-241 may have between about 5.0 wt% and about 20 wt% enrichment. The nuclear fuel may include one or more ceramic fuel types of uranium-, plutonium-, and/or thorium-oxides. The nuclear fuel may also include mixed oxide ("MOX") fuel containing a mixture of more than one oxide of fissile material. As an example, the nuclear fuel can include a mixture of plutonium oxides and uranium oxides, and in some embodiments can also include Thorium.

The fuel bundle 14 is characterized by using in some of its fuel elements 22 (such as specifically its inner element(s)) fissile material(s) with a mixture of neutron absorber materials (or neutron absorber mixture). The fissile material(s) may include one or more of the fissile materials described above. The mixture of neutron absorber materials (or neutron absorber mixture) includes two or more different neutron absorbers. The two or more different neturon absorbers include two or more of gadolinium (Gd), dysprosium (Dy), hafnium (Hf), erbium (Er), and europium (Eu). In some embodiments, a neutron absorber mixture including gadolinium as the first neturon absorber and one or more of dysprosium, hafnium, erbium, and/or europium as the second or more neturon absorber(s) is particularly effective in various applications. In some preferred embodiments, the neutron absorber mixture includes gadolinium and dysprosium.

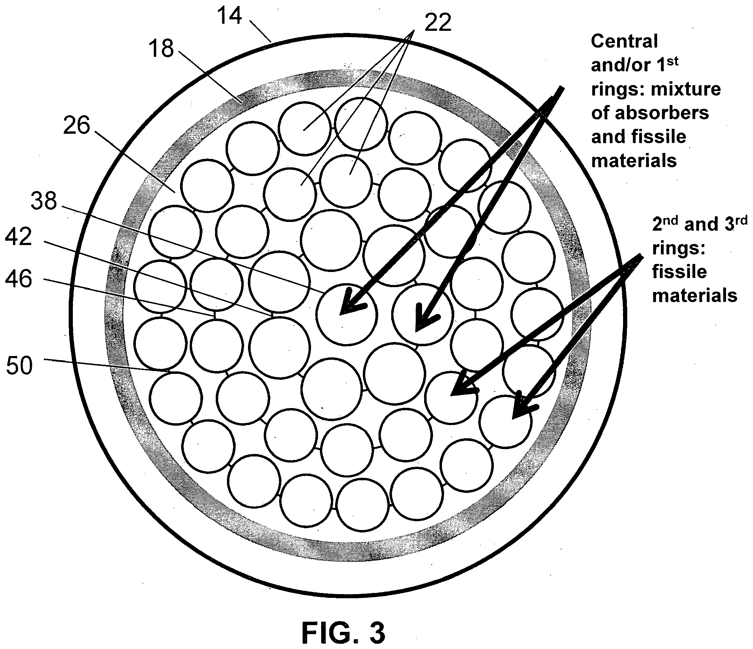

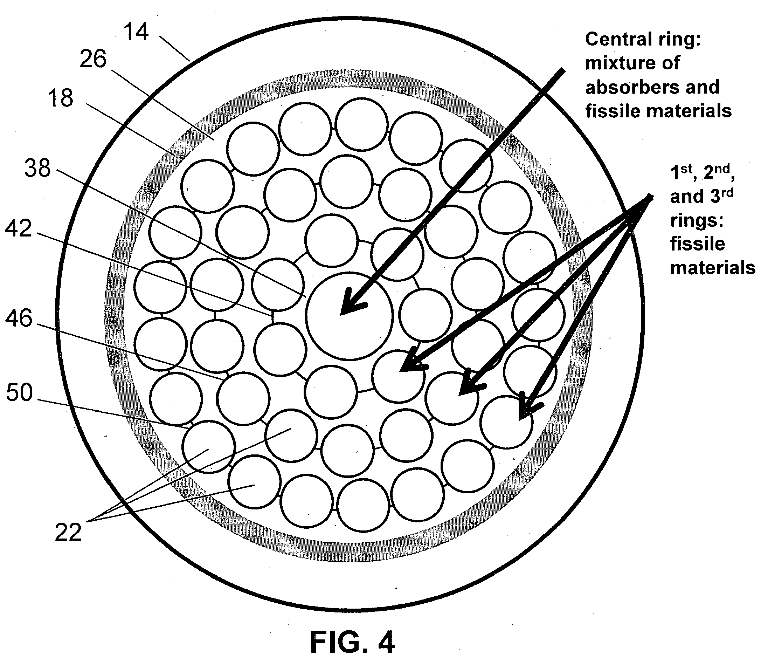

Various constructions of the fuel bundles 14 having fissile material(s) with the neutron absorber mixture in accordance with the present disclosure are presented in Table 1, Table 2, and Table 3. In some constructions, the neutron absorber mixture comprises between about 1 wt% and about 30 wt% of the fuel meat at the fresh fuel condition (Table 1). In some more specific constructions, the neutron absorber mixture comprises between about 1 wt% and about 20 wt% of the fuel meat at the fresh fuel condition (Tables 2 and 3). According to the invention, the neutron absorber mixture comprises between about 10 wt% and about 40 wt% of the fuel meat at the fresh fuel condition (Table 2) in light water reactor applications. The quantity of inner element(s) containing the fissile material(s) with the neutron absorber mixture may be between about 1 and about 11 elements for 37-61 element CANDU/CANFLEX fuel bundles or about 1 to about 10 wt% in multiple fuel elements in a non-CANDU fuel assembly (Table 1). More specifically, the quantity of inner element(s) may be between about 1 and about 7 elements for the 37-element bundles (FIG. 2), between about 1 and about 8 elements for the 43-element bundle (FIGS. 3 and 4), and between about 1 and about 11 elements for the 61-element bundle (FIG. 5) (Table 2). The remaining outer elements include one or more of the fissile materials described above, preferably any of U-233, U-235, PU-239, PU-241, and Thorium.

For light water reactor applications, some or all of the elements may include the combination of the fissile material(s) with the neutron absorber mixture described above (Table 2). Alternatively, for light water reactor applications having pellets in the elements, some or all of the pellets in each element may have the combination of the fissile material(s) with the neutron absorber mixture described above.

According to the invention, the combination of fissile material(s) with the neutron absorber mixture described above is a homogeneous combination or mixture having a generally even distribution of fissile material(s) and neutron absorber mixture throughout each whole element 22 (or pellet for those reactors employing fuel in pellet form).

With reference to the construction of FIG. 2, a 37-element fuel bundle for CANDU designs is shown. In one preferred construction, the central ring 38 includes the homogeneous mixture of absorbers and any one or more of the fissile materials described above, and the first, second, and third rings 42, 46, 50 include any one or more of the fissile materials as described above.

Turning to the construction of FIG. 3, a 43-element fuel bundle for CANFLEX designs is shown. In one preferred construction, the central ring 38 and the first ring 42 include one or more elements 22 having the homogeneous mixture of absorbers and any one or more of the fissile materials described above, and the second and third rings 46, 50 include any one or more of the fissile materials as described above.

Referring now to FIG. 4, a 43-element CANFLEX variant is shown. In one preferred construction, the central ring 38 includes the homogeneous mixture of absorbers and any one or more of the fissile materials described above, and the first, second, and third rings 42, 46, 50 include any one or more of the fissile materials as described above.

Finally, with reference to FIG. 5, a 61-element CANFLEX variant is shown. In one preferred construction, the central ring 38 and the first ring 42 include one or more elements 22 having the homogeneous mixture of absorbers and any one or more of the fissile materials described above, and the second, third, and fourth rings 46, 50, 52 include any one or more of the fissile materials as described above.

**Table 1.**

| **Major Parameters** | **Application Range** |
|---|---|
| Fuel geometry | - For CANDU fuels: 37-Element, 43-Element CANFLEX fuel geometry and its variants. 61-Element CANFLEX fuel geometry and its variants, any fuel geometries with fuel pins between 43 and 61. |
| | - For Non-CANDU fuels: Any square lattice assembly. |
| Fuel isotopic composition | Ceramic fuel types of UO2, PUO2 and ThO2 |
| Neutron absorber materials | Combination of Gd with any of Dy, Hf, Er and Eu |
| Neutron absorber amount | 1 wt% ∼ 30 wt% of the fuel meat at fresh state |
| Fissile materials to be combined with absorber materials | Any of U-233, U-235, PU-239 and PU-241 |
| Fissile enrichment with the neutron absorber materials | 0.9 wt% ∼ 20 wt% |
| Number of fuel elements with the mixture of above neutron absorber and fissile materials | 1 ∼ 11 element(s) for 37 - 61 element CANDU fuel bundle, or 1 ∼ 10 wt% in multiple fuel elements in a non-CANDU fuel assembly. |
| Averaged coolant void reactivity (CVR) at Nominal Condition | -15 mk ~ +3 mk |
| Average fuel discharge burnup (at the fuel exit condition) | 7,000 MWD/T ∼ 60,000 MWD/T |
| Coolant type | Heavy water or light water |
| Moderator type | Heavy water or light water |
| Reactor Type | Thermal reactors: CANDU (and its variants such as SCWR), PWR and BWR |

**Table 2.**

| **Major parameters** | **Application Range for CANDU** | **Application Range for LWR** |
|---|---|---|
| Fuel geometry | - CANDU bundle: 37-, 43- and 61-Elements CANDU or CANFLEX designs and its variants. | - LWR assembly consisting of n x n fuel pins in a rectangular geometry. |
| | *ex): 37-Element bundle design consists of 37 elements (or pin or rod) in a cylindrically shaped bundle geometry. | |
| Fissionable isotopic materials (1) | Ceramic fuel types of UO₂, PUO₂ or THO₂ | Ceramic fuel types of UO₂, PUO₂ or THO₂ |
| Neutron absorber materials (2 or 3) | Gd + Dy, | Gd + Dy, |
| | Gd + Er, and | Gd + Er, |
| | Gd + Dy + Er, | Gd + Hf, |
| | | Gd + Dy + Er, |
| | | Gd + Dy + Hf, and |
| | | Gd + Er + Hf |
| Final form of composite burnable absorber mixture (3) | Element (or rod or pin) type mixture combined with Neutron absorber materials (2) + Fuel isotopic materials (1) | Pin (or rod) type mixture combined with Neutron absorber materials (2) + Fuel isotopic materials (1) |
| | | * Note: The mixture is a homogenized form of absorber and fuel isotopes. |
| | * Note: The mixture is a homogenized form of absorber and fuel isotopes. | |
| Location of composite burnable absorber mixture element | - Center element (Total 1 element) | - Full or partial usage in the pins of a fuel assembly. |
| | - Center element + inner ring. (Total 7 elements for 37-Element bundle, 8 elements for 43-Element Bundle and 11 elements for 61-Element Bundle) | * Note: Partial usage includes partial number of pins in an assembly and partial usage of mixture element pellets in a pin. |
| | - Partial usage of absorber mixture elements in the | |
| | 'Center element + inner ring' case. | |
| Neutron absorber amount | 1 wt% ∼ 20 wt% of absorber materials (2) in any composite mixture (3) at the fresh fuel condition | 10 wt% ∼ 40 wt% of absorber materials (2) in any composite mixture (3) at the fresh fuel condition |
| Fissile materials to be combined | Any of U-233, U-235, PU-239 and PU-241 | Any of U-233, U-235, PU-239 and PU-241 |
| with absorber materials | | |
| Fissile enrichment with the neutron absorber materials | 0.9 wt% ∼ 5.0 wt% | 5.0 wt% ∼ 20.0 wt% |
| Averaged coolant void reactivity (CVR) at Nominal Condition | -15 mk ∼ +3 mk | irrelevant (negative inherently) |
| Average fuel discharge burnup (at the fuel exit condition) | 10,000 MWD/T ∼ 35,000 MWD/T | 35,000 MWD/T ∼ 65,000 MWD/T |
| Coolant type | Heavy water or light water | Light water |
| Moderator type | Heavy water | Light water |
| Reactor Type | CANDU or Pressurized Heavy Water Reactor | Pressurized Water Reactor and Boiling Water Reactor |

**Table 3.**

| **Major parameters** | **Application Range** |
|---|---|
| Fuel geometry | - CANDU bundle: 37-, 43- and 61-Elements CANDU or CANFLEX designs and its variants. |
| | *ex): 37-Element bundle design consists of 37 elements (or pin or rod) in a cylindrically shaped bundle geometry. |
| Fissionable isotopic materials (1) | Ceramic fuel types of UO₂, PUO₂ or THO₂ |
| Neutron absorber materials (2 or 3) | Gd + Dy, |
| | Gd + Er, |
| | Gd + Dy + Er |
| **Final form of composite burnable absorber mixture (3)** | Element (or rod or pin) type mixture combined with Neutron absorber materials (2) + Fuel isotopic materials (1) |
| Location of composite burnable absorber mixture element | - Center element (Total 1 element) |
| | - Center element + inner ring. (Total 7 elements for 37-Element bundle, 8 elements for 43-Element Bundle and 11 elements for 61-Element Bundle) |
| | - Partial usage of absorber mixture elements in the 'Center element + inner ring' case. |
| Neutron absorber amount | 1 wt% ∼ 20 wt% of absorber materials (2) in any composite mixture (3) at the fresh fuel condition |
| Fissile materials to be combined with absorber materials | Any of U-233, U-235, PU-239 and PU-241 |
| Fissile enrichment with the neutron absorber | 0.9 wt% ∼ 5.0 wt% |
| materials | |
| Averaged coolant void reactivity (CVR) at Nominal Condition, including for CANDU reactors | -15 mk ∼ +3 mk |
| Average fuel discharge burnup (at the fuel exit condition) | 10,000 MWD/T ∼ 30,000 MWD/T |
| Coolant type | Heavy water |
| Moderator type | Heavy water |
| Reactor Type | CANDU |

The purpose of the neturon absorber mixture is primarily to effectively control simultaneously the following design parameters: coolant void reactivity, linear element rating, fueling impact and fuel burnup. Different neutron absorbers have different depletion characteristics. By using more than one neutron absorber, these depletion characteristics are combined such that the absorbers can work during different phases of the fuel depletion period. The first neutron absorber, such as the gadolinium, helps control reactivity by providing extra reactivity of the fuel while the fuel burns out around mid-burnup. The second (or more) neutron absorber helps reduce coolant void reactivity until the end of fuel discharge burnup. Gadolinium has been known as an effective absorber for short-term reactivity control purposes; however, it has been discovered in accordance with the present disclosure that in a specific environment as in a CANDU type reactor (and some non-CANDU reactors as discussed above) having a more hardened neutron spectrum than that of natural uranium, gadolidium can be used for longer-term reactivity control purposes.

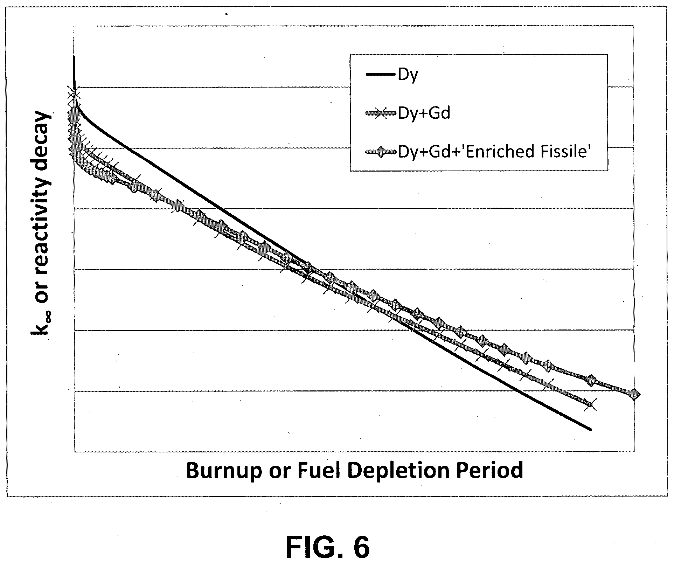

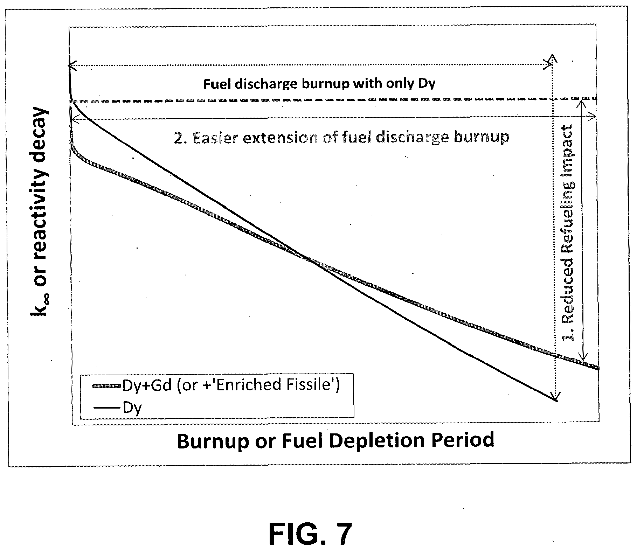

As illustrated in FIGS. 6 and 7, the fuel designs disclosed herein achieve low reactivity impact and thus extend the fuel discharge burnup while maintaining a low power impact and related parameters during normal operation of the reactor core. From the aspect of reactivity decay of a fuel, the decay curve (FIG. 6) is smoothed with the use of the combined fissile material(s) and mixture of neutron absorber materials compared with Dy+Gd and Dy alone.

Furthermore, it is desirable to decrease coolant void reactivity (CVR), and even provide a negative CVR, in a pressurized heavy water nuclear reactor such as the CANDU reactor. Canadian Patent No. 2,097,412, provides a useful background on the science of reducing coolant void reactivity, in particular in CANDU reactors. With this invention, CVR could also be maintained negative without a significant impact on fuel discharge burnup. Prior art designs using a single burnable poison to limit CVR would decrease fuel discharge burnup.

Previously, CANDU fuels could typically not achieve higher burnup than around 10,000 MWd/T. This is mainly due to the high refueling impact (such as power peaking or high channel and bundle powers) during online refueling because higher burnup can only be achieved based on enriched fuel designs. Thus, high-burnup and low reactivity impact are two competing design features. The fuels disclosed herein are intended to resolve this issue and can extend fuel burnup up to 35,000 MWd/T in CANDU reactors and up to 70,000 MWd/T in LWR reactors. By way of example only, in some embodiments the fuels disclosed herein can extend fuel burnup to ∼ 30,000 MWD/T ∼ 60,000 MWD/T for LWR reactors.

As described in detail above, the fuels disclosed herein can also be applied to non-CANDU reactors such as PWR to achieve a fuel designs with reduced power peaking or extended fuel burnup. High burnup fuel enables deeper burning of fissile materials and thus enables more neutron economy. The main economic benefits in reaching high burnup fuel are high fuel resident time in the reactor (less amount of fuel fabrication, i.e., it takes three times less fuel than in CANDU NU), less waste to disposition (less storage area is needed), and reduced propensity for proliferation.

Thus, the invention provides, in some embodiments, a fuel design characterized by using a mixture of neutron absorber materials in fuel elements of a non-CANDU fuel assembly. The neutron absorber mixture suppresses reactivity of the core, controls local power peak and/or controls coolant void reactivity. Various features and advantages of the disclosure are set forth in the following claims.

## Claims

1. A fuel element (22) for a nuclear reactor (10), the fuel element comprising:
at least one fissile material selected from the group consisting of U-233, U-235, PU-239, and PU-241 and containing at least two different neutron absorber elements selected from the group consisting of Gd, Dy, Hf, Er, and Eu;
wherein the at least one fissile material and the at least two neutron absorbers are homogeneously mixed in the fuel element for providing a generally even distribution of the at least one fissile material and the at least two neutron absorbers throughout the fuel element;
wherein the at least two different neutron absorber elements comprise 10 wt% - 40 wt% of the fuel element's fuel meat at fresh fuel conditions, wherein the fuel element is configured for a light water reactor.

2. The fuel element according to claim 1 wherein a first neutron absorber of the at least two neutron absorbers has a first depletion characteristic that provides neutron absorption during burnup of the fuel element, and wherein the second neutron absorber of the at least two neutron absorbers has a second depletion characteristic different from the first depletion characteristic.

3. The fuel element of claim 1 or 2, wherein the at least one fissile material is more than 0.9 wt% enrichment or the at least one fissile material is between about 0.9 wt% and about 20 wt% enrichment.

4. The fuel element of claim 1 or 2, wherein the at least two neutron absorbers include Gd and Dy.

5. The fuel element of any one of claims 1 to 4, wherein the at least two neutron absorbers comprise:
a first neutron absorber; and
a second neutron absorber;
wherein the first neutron absorber Gd ; and
wherein the second neutron absorber is selected from the group consisting of Dy, Hf, Er, and Eu.

6. A fuel bundle (14) for a nuclear reactor, the fuel bundle comprising the fuel element (22) of any one of claims 1 to 5.

7. The fuel bundle of claim 6, wherein the fuel element is a first fuel element, the fuel bundle further comprising a second fuel element containing a fissile material, wherein the first fuel element is disposed in an inner portion of the fuel bundle and the second fuel element is disposed in an outer portion of the fuel bundle.

8. The fuel bundle of claim 6 or claim 7, comprising a plurality of fuel elements containing a fissile material disposed in the outer portion of the fuel bundle.

9. A fuel bundle (14) for a nuclear reactor (10), the fuel bundle comprising:
a plurality of fuel elements (22) including inner elements (38) and outer elements (42, 46, 50, 54);
wherein at least one of the inner elements includes a fuel element of any one of claims 1 to 5,
wherein the at least two neutron absorbers comprises:
a first neutron absorber; and
a second neutron absorber
wherein the first and second neutron absorbers having different depletion characteristics, such that the neutron absorbers can work at different phases of the fuel depletion period.

10. A fuel bundle according to claim 9 wherein the second neutron absorber absorbs neutrons until the end of fuel discharge burnup.

11. A method of controlling burnup of a nuclear fuel element (22), the method comprising:
providing in the nuclear fuel element (22) a homogeneous combination of a fissile material, a first neutron absorber element having a first depletion characteristic, and a second neutron absorber element having a second depletion characteristic different from the first depletion characteristic;
burning the nuclear fuel element during a fuel depletion period;
absorbing neutrons with the first neutron absorber element and with the second neutron absorber element at different phases of the fuel depletion period; and
wherein the first neutron absorber element and the second neutron absorber element are different neutron absorbers elements selected from the group consisting of Gd, Dy, Hf, Er, and Eu; and
wherein the fissile material is selected from the group consisting of U-233, U-235, PU-239, and PU-241;
and wherein the first neutron absorber and the second neutron absorber combined comprise 10 wt% - 40 wt% of the nuclear fuel element's fuel meat at fresh fuel conditions, wherein the fuel element is configured for a light water reactor.

12. The method of claim 11, further comprising installing the nuclear fuel element in a bundle (14), optionally wherein installing the nuclear fuel element comprises installing the nuclear fuel element in an inner portion of the fuel bundle with respect to other fuel elements in the fuel bundle.

13. The method of any one of claims 11 or 12 wherein the fuel element is the fuel element of any one of claims 1 to 5.

## Patentansprüche

1. Brennstoffelement (22) für einen Kernreaktor (10), wobei das Brennstoffelement Folgendes umfasst:
mindestens ein spaltbares Material, gewählt aus der Gruppe, bestehend aus U-233, U-235, PU-239 und PU-241 und welches mindestens zwei unterschiedliche Neutronenabsorberelemente enthält, gewählt aus der Gruppe, bestehend aus Gd, Dy, Hf, Er und Eu;
wobei das mindestens eine spaltbare Material und die mindestens zwei Neutronenabsorber homogen in dem Brennstoffelement gemischt sind, um eine allgemein einheitliche Verteilung des mindestens einen spaltbaren Materials und der mindestens zwei Neutronenabsorber durch das Brennstoffelement bereitzustellen;
wobei die mindestens zwei unterschiedlichen Neutronenabsorberelemente 10 Gewichtsprozent bis 40 Gewichtsprozent des Brennstoffs des Brennstoffelements unter frischen Brennstoffbedingungen umfassen, wobei das Brennstoffelement für einen Leichtwasserreaktor konfiguriert ist.

2. Brennstoffelement nach Anspruch 1, wobei ein erster Neutronenabsorber der mindestens zwei Neutronenabsorber ein erstes Verarmungsmerkmal aufweist, welches Neutronenabsorption während des Abbrennens des Brennstoffelements bereitstellt, und wobei der zweite Neutronenabsorber der mindestens zwei Neutronenabsorber ein zweites Verarmungsmerkmal aufweist, welches sich von dem ersten Verarmungsmerkmal unterscheidet.

3. Brennstoffelement nach Anspruch 1 oder 2, wobei das mindestens eine spaltbare Material über 0,9 Gewichtsprozent Anreicherung aufweist oder das mindestens eine spaltbare Material zwischen ungefähr 0,9 Gewichtsprozent und ungefähr 20 Gewichtsprozent Anreicherung aufweist.

4. Brennstoffelement nach Anspruch 1 oder 2, wobei die mindestens zwei Neutronenabsorber Gd und Dy einschließen.

5. Brennstoffelement nach einem der Ansprüche 1 bis 4, wobei die mindestens zwei Neutronenabsorber Folgendes umfassen:
einen ersten Neutronenabsorber; und
einen zweiten Neutronenabsorber;
wobei der erste Neutronenabsorber Gd ist; und
wobei der zweite Neutronenabsorber aus der Gruppe gewählt ist, bestehend aus Dy, Hf, Er und Eu.

6. Brennstoffbündel (14) für einen Kernreaktor, wobei das Brennstoffbündel das Brennstoffelement (22) nach einem der Ansprüche 1 bis 5 umfasst.

7. Brennstoffbündel nach Anspruch 6, wobei das Brennstoffelement ein erstes Brennstoffelement ist, wobei das Brennstoffbündel ferner ein zweites Brennstoffelement umfasst, welches ein spaltbares Material enthält, wobei das erste Brennstoffelement in einem inneren Abschnitt des Brennstoffbündels angeordnet ist und das zweite Brennstoffelement in einem äußeren Abschnitt des Brennstoffbündels angeordnet ist.

8. Brennstoffbündel nach Anspruch 6 oder 7, umfassend eine Vielzahl von Brennstoffelementen, welche ein spaltbares Material enthalten, und welche in dem äußeren Abschnitt des Brennstoffbündels angeordnet sind.

9. Brennstoffbündel (14) für einen Kernreaktor (10), wobei das Brennstoffbündel Folgendes umfasst:
eine Vielzahl von Brennstoffelementen (22), welche innere Elemente (38) und äußere Elemente (42, 46, 50, 54) einschließt;
wobei mindestens eines der inneren Elemente ein Brennstoffelement nach einem der Ansprüche 1 bis 5 einschließt,
wobei die mindestens zwei Neutronenabsorber Folgendes umfassen:
einen ersten Neutronenabsorber; und
einen zweiten Neutronenabsorber
wobei der erste und der zweite Neutronenabsorber unterschiedliche Verarmungsmerkmale in einer Weise aufweisen, dass die Neutronenabsorber bei unterschiedlichen Phasen der Brennstoffverarmungsperiode arbeiten können.

10. Brennstoffbündels nach Anspruch 9, wobei der zweite Neutronenabsorber Neutronen bis zum Ende des Brennstoff-Entladeabbrandes absorbiert.

11. Verfahren zum Steuern des Abbrandes eines Kernbrennstoffelements (22), wobei das Verfahren Folgendes umfasst:
Bereitstellen in einem Kernbrennstoffelement (22) einer homogenen Kombination aus einem spaltbaren Material, einem ersten Neutronenabsorberelement, welches ein erstes Verarmungsmerkmal aufweist, und einem zweiten Neutronenabsorberelement, welches ein zweites Verarmungsmerkmal aufweist, welches sich von dem ersten Verarmungsmerkmal unterscheidet;
Verbrennen des Kernbrennstoffelements während einer Brennstoffverarmungsperiode;
Absorbieren von Neutronen mit dem ersten Neutronenabsorberelement und mit dem zweiten Neutronenabsorberelement bei unterschiedlichen Phasen der Brennstoffverarmungsperiode; und
wobei das erste Neutronenabsorberelement und das zweite Neutronenabsorberelement unterschiedliche Neutronenabsorberelemente sind, gewählt aus der Gruppe, bestehend aus Gd, Dy, Hf, Er und Eu; und
wobei das spaltbare Material aus der Gruppe gewählt ist, bestehend aus U-233, U-235, PU-239 und PU-241;
und wobei das erste Neutronenabsorberelement und das zweite Neutronenabsorberelement kombiniert 10 Gewichtsprozent bis 40 Gewichtsprozent des Brennstoffs des Kernbrennstoffelements unter frischen Brennstoffbedingungen umfassen, wobei das Brennstoffelement für einen Leichtwasserreaktor konfiguriert ist.

12. Verfahren nach Anspruch 11, ferner umfassend Installieren des Kernbrennstoffelements in einem Bündel (14), wobei optionsweise Installieren des Kernbrennstoffelements Installieren des Kernbrennstoffelements in einem inneren Abschnitt des Brennstoffbündels in Bezug auf andere Brennstoffelemente in dem Brennstoffbündel umfasst.

13. Verfahren nach einem der Ansprüche 11 oder 12, wobei das Brennstoffelement das Brennstoffelement nach einem der Ansprüche 1 bis 5 ist.

## Revendications

1. Élément de combustible (22) pour un réacteur nucléaire (10), l'élément de combustible comprenant :
au moins un matériau fissile qui est sélectionné parmi le groupe constitué par U-233, U-235, PU-239 et PU-241 et qui contient au moins deux éléments absorbeurs de neutrons différents qui sont sélectionnés parmi le groupe constitué par Gd, Dy, Hf, Er et Eu;
dans lequel l'au moins un matériau fissile et les au moins deux absorbeurs de neutrons sont mélangés de façon homogène dans l'élément de combustible pour fournir une distribution généralement uniforme de l'au moins un matériau fissile et des au moins deux absorbeurs de neutrons dans la totalité de l'élément de combustible ;
dans lequel les au moins deux éléments absorbeurs de neutrons différents comprennent de 10 % en poids à 40 % en poids de la ressource combustible de l'élément de combustible dans des conditions de combustible frais ; dans lequel l'élément de combustible est configuré pour un réacteur à eau légère.

2. Élément de combustible selon la revendication 1, dans lequel un premier absorbeur de neutrons des au moins deux absorbeurs de neutrons présente une première caractéristique d'épuisement qui fournit une absorption des neutrons pendant la combustion de l'élément de combustible, et dans lequel le second absorbeur de neutrons des au moins deux absorbeurs de neutrons présente une seconde caractéristique d'épuisement qui est différente de la première caractéristique d'épuisement.

3. Élément de combustible selon la revendication 1 ou 2, dans lequel l'au moins un matériau fissile présente un enrichissement supérieur à 0,9 % en poids ou l'au moins un matériau fissile présente un enrichissement qui se situe entre environ 0,9 % en poids et environ 20 % en poids.

4. Élément de combustible selon la revendication 1 ou 2, dans lequel les au moins deux absorbeurs de neutrons incluent Gd et Dy.

5. Élément de combustible selon l'une quelconque des revendications 1 à 4, dans lequel les au moins deux absorbeurs de neutrons comprennent :
un premier absorbeur de neutrons ; et
un second absorbeur de neutrons ;
dans lequel le premier absorbeur de neutrons est Gd ; et
dans lequel le second absorbeur de neutrons est sélectionné parmi le groupe constitué par Dy, Hf, Er et Eu.

6. Grappe de combustible (14) pour un réacteur nucléaire, la grappe de combustible comprenant l'élément de combustible (22) selon l'une quelconque des revendications 1 à 5.

7. Grappe de combustible selon la revendication 6, dans laquelle l'élément de combustible est un premier élément de combustible, la grappe de combustible comprenant en outre un second élément de combustible qui contient un matériau fissile, dans laquelle le premier élément de combustible est disposé dans une partie interne de la grappe de combustible et le second élément de combustible est disposé dans une partie externe de la grappe de combustible.

8. Grappe de combustible selon la revendication 6 ou la revendication 7, comprenant une pluralité d'éléments de combustible contenant un matériau fissile qui sont disposés dans la partie externe de la grappe de combustible.

9. Grappe de combustible (14) pour un réacteur nucléaire (10), la grappe de combustible comprenant :
une pluralité d'éléments de combustible (22) qui incluent des éléments internes (38) et des éléments externes (42, 46, 50, 54) ;
dans laquelle au moins l'un des éléments internes inclut un élément de combustible selon l'une quelconque des revendications 1 à 5 ;
dans laquelle les au moins deux absorbeurs de neutrons comprennent :
un premier absorbeur de neutrons ; et
un second absorbeur de neutrons ;
dans laquelle les premier et second absorbeurs de neutrons présentent des caractéristiques d'épuisement différentes de telle sorte que les absorbeurs de neutrons peuvent fonctionner à des phases différentes de la période d'épuisement du combustible.

10. Grappe de combustible selon la revendication 9, dans laquelle le second absorbeur de neutrons absorbe des neutrons jusqu'à la fin de la combustion par décharge de combustible.

11. Procédé de commande de la combustion d'un élément de combustible nucléaire (22), le procédé comprenant :
la fourniture, dans l'élément de combustible nucléaire (22), d'une combinaison homogène d'un matériau fissile, d'un premier élément absorbeur de neutrons qui présente une première caractéristique d'épuisement et d'un second élément absorbeur de neutrons qui présente une seconde caractéristique d'épuisement qui est différente de la première caractéristique d'épuisement ;
la combustion de l'élément de combustible nucléaire pendant une période d'épuisement de combustible ;
l'absorption de neutrons avec le premier élément absorbeur de neutrons et avec le second élément absorbeur de neutrons lors de phases différentes de la période d'épuisement de combustible ; et
dans lequel le premier élément absorbeur de neutrons et le second élément absorbeur de neutrons sont des éléments absorbeurs de neutrons différents qui sont sélectionnés parmi le groupe constitué par Gd, Dy, Hf, Er et Eu ; et
dans lequel le matériau fissile est sélectionné parmi le groupe constitué par U-233, U-235, PU-239 et PU-241 ;
et dans lequel le premier absorbeur de neutrons et le second absorbeur de neutrons comprennent en combinaison de 10 % en poids à 40 % en poids de la ressource combustible de l'élément de combustible dans des conditions de combustible frais, dans lequel l'élément de combustible est configuré pour un réacteur à eau légère.

12. Procédé selon la revendication 11, comprenant en outre l'installation de l'élément de combustible nucléaire dans une grappe (14), facultativement dans lequel l'installation de l'élément de combustible comprend l'installation de l'élément de combustible nucléaire dans une partie interne de la grappe de combustible par rapport à d'autres éléments de combustible dans la grappe de combustible.

13. Procédé selon l'une quelconque des revendications 11 ou 12, dans lequel l'élément de combustible est l'élément de combustible selon l'une quelconque des revendications 1 à 5.
